# EUROPÄISCHE PATENTSCHRIFT

(11) **EP 3 088 209 B1**
(45) Veröffentlichungstag und Bekanntmachung des Hinweises auf die Patenterteilung: **14.03.2018**
(21) Anmeldenummer: 16151770.1
(22) Anmeldetag: 19.01.2016
(51) Int. Cl.: B60C 9/02, B60C 15/00, B60C 15/06, B60C 9/04

(54) **FAHRZEUGLUFTREIFEN**
PNEUMATIC TYRE FOR A VEHICLE
PNEUMATIQUE DE VÉHICULE

(30) Priorität: 27.04.2015 DE 102015207714
(43) Veröffentlichungstag der Anmeldung: 02.11.2016
(73) Patentinhaber: Continental Reifen Deutschland GmbH, 30165 Hannover (DE)
(72) Erfinder: Blümel, Viktor, 30459 Hannover (DE); Palavras, Joana, 30165 Hannover (DE); Poland, Bridget, 30159 Hannover (DE)
(74) Vertreter: Finger, Karsten

(56) Entgegenhaltungen:
- GB-A- 1 137 588
- JP-A- H1 111 109
- JP-A- H04 129 803
- US-A- 3 509 930
- US-A1- 2014 345 775

## Beschreibung

Die Erfindung betrifft einen Fahrzeugluftreifen in radialer Bauart mit einem profilierten Laufstreifen, einem mehrlagigen Gürtel, Wulstbereichen mit Wulstkernen sowie mit einer Radialkarkasse, welche in Kombination Lagen mit textilen Festigkeitsträgern und mit Festigkeitsträgern aus Stahl enthält, wobei zumindest eine Lage mit textilen Festigkeitsträgern die Wulstkerne umschließt und eine Lage mit Stahl- Festigkeitsträgern vorgesehen ist, welche von Wulstbereich zu Wulstbereich verläuft jedoch die Wulstkerne nicht umschließt und in einem Überlappungsbereich, welcher eine Breite von mindestens 15 mm aufweist, an die zumindest eine Lage mit textilen Festigkeitsträgern angebunden ist.

Fahrzeugluftreifen für Personenkraftwagen, Vans oder Lighttrucks enthalten üblicherweise eine einzige textile Karkasslage, wobei in Fahrzeugluftreifen, die größeren Beanspruchungen ausgesetzt sind, auch zwei oder mehr als zwei textile Karkasslagen vorgesehen sein können. Textile Karkasslagen weisen allerdings den Nachteil auf, dass sie sich durch die Beanspruchungen, welchen der Fahrzeugluftreifen im Betrieb während seiner Lebensdauer ausgesetzt ist, plastisch verformen ("kriechen") und dadurch ein nicht konstantes Fahrverhalten des Reifens über seine Lebensdauer zur Folge haben können. Darüber hinaus leisten textile Karkasslagen einen gewissen Beitrag zum Rollwiderstand des Fahrzeugluftreifens. Stahl-Karkasslagen hingegen sind ausreichend stabil, um mehrere textile Karkasslagen zu ersetzen. Stahl-Karkasslagen neigen nicht zum Kriechen und tragen deutlich weniger zum Rollwiderstand eines Fahrzeugluftreifens bei als textile Karkasslagen. Aus diesen Gründen werden Stahl-Karkasslagen vorrangig in Nutzfahrzeugreifen verwendet. Die Fertigung von Fahrzeugluftreifen mit Stahl-Karkasslagen ist aufwändiger als die Fertigung von Fahrzeugluftreifen mit textilen Karkasslagen, da der Lagenumschlag von Stahl-Karkasslagen schwieriger zu erstellen ist und besondere Maschinenkomponenten erfordert. Mit den üblichen Baumaschinen für Fahrzeugluftreifen für Personenkraftwagen kann der Lagenumschlag von Stahl-Karkasslagen nicht erstellt werden. Darüber hinaus wird eine relativ aufwändige Wulstkonstruktion mit Wulstverstärkungslagen und dergleichen benötigt, um die Dauerhaltbarkeit der Wulstbereiche an den Enden der Karkasshochschläge von Stahl-Karkasslagen sicherzustellen.

Ein Fahrzeugluftreifen der eingangs genannten Art ist aus der US 3 509 930 A bekannt. Dieses Dokument offenbart mehrere Ausführungsvarianten eines Fahrzeugluftreifens, dessen Radialkarkasse in Kombination Lagen mit textilen Festigkeitsträgern und solche mit Festigkeitsträgern aus Stahl enthält, wobei zumindest eine Lage mit textilen Festigkeitsträgern die Wulstkerne umschließt und eine Lage mit Stahl-Festigkeitsträgern vorgesehen ist, welche von Wulstbereich zu Wulstbereich verläuft, jedoch die Wulstkerne nicht umschließt. Dabei ist eine einzige Lage mit textilen Festigkeitsträgern vorgesehen, die bei sämtlichen Ausführungsvarianten durchgehend von Wulstbereich zu Wulstbereich verläuft. Bei den aus der US 2014/0345775 A1 und der JP H11 11109 A bekannten Reifen ist jeweils eine die Wulstkerne umlaufende von Wulstbereich zu Wulstbereich durchgehende Stahl-Karkasslage vorgesehen. Je eine textile Lage verläuft in den Seitenwänden axial außerhalb der Stahl-Karkasslage und umläuft ebenfalls den Wulstkern. Die GB1 137 588 A befasst sich mit einer speziellen Ausführung einer Karkasslagenschicht, deren Fäden oder Drähte im oberen Teil der Seitenwände radial und ansonsten schräg verlaufen und von einer separaten Scheitelschicht und Wulstschichten gekreuzt sind.

Aus der JP H04 129803 A ist ein Nutzfahrzeugreifen bekannt, welcher in der Karkasse eine Stahl-Karkasslage als Radiallage enthält und zusätzlich im Bereich der Seitenwände und der Umschläge mit zwei textilen Lagen in Diagonalanordnung verstärkt ist. Aus der JPH11321216 A ist ein Nutzfahrzeugreifen bekannt, dessen Karkasslage aus zwei Stahl-Karkasslagenteilen besteht, die radial innerhalb der Randbereiche des Gürtels beginnend über die Bereiche der Seitenwände verlaufen, die Wulstkerne umschlingen und als Hochschläge in bekannter Weise enden. Eine textile Karkasslage verläuft radial innerhalb des Gürtels zwischen den beiden Stahl-Karkasslagenteilen und überlappt mit diesen radial innerhalb des Gürtels jeweils über einen kurzen Abschnitt.

Der Erfindung liegt die Aufgabe zu Grunde, bei einem Fahrzeugluftreifen der eingangs genannten Art die Radialkarkasse derart auszuführen, dass sie nicht mehr zum Kriechen neigt, den Rollwiderstand des Reifens nicht beeinträchtigt und deren Lagenumschläge mit Standard-PKW-Baumaschinen erstellt werden können, wobei keine aufwändigen Wulstkonstruktionen für die Dauerhaltbarkeit der Wulstbereiche erforderlich sein sollen.

Gelöst wird die gestellte Aufgabe erfindungsgemäß dadurch, dass jeder Wulstkern von zumindest je einem separaten Lagenteil mit textilen Festigkeitsträgern umschlossen ist.

In einem erfindungsgemäß ausgeführten Fahrzeugluftreifen umschließt bzw. umläuft zumindest eine Lage mit textilen Festigkeitsträgern jeden Wulstkern und übernimmt daher die Haltefunktion in den Wulstbereichen. Die Lage mit Stahl-Festigkeitsträgern übernimmt zumindest den überwiegenden Teil der Tragefunktion der Karkasse in den Seitenwandbereichen des Reifens. Die erfindungsgemäße Konstruktion wirkt sich daher positiv auf den Rollwiderstand des Reifens aus. Da keine Stahl-Karkasslage die Wulstkerne umschließt, können die Umschläge mit einer herkömmlichen, standardmäßigen Baumaschine durchgeführt werden. Die Stahl-Festigkeitsträger verleihen dem Fahrzeugluftreifen eine hohe Stabilität und sind auch für die Handlingeigenschaften des Reifens vorteilhaft.

Je nach Einsatz des Fahrzeugluftreifens sind besondere Ausführungsvarianten der Erfindung vorteilhaft. Bei sämtlichen Ausführungsvarianten verläuft die Lage mit Stahl-Festigkeitsträgern von Wulstbereich zu Wulstbereich durchgehend.

Besonders bevorzugt ist ferner eine Ausführungsform, bei der die mit textilen Festigkeitsträgern versehenen separaten Lagenteile mit ihren Abschnitten bis in eine in radialer Richtung ermittelte Höhe reichen, die mindestens 5 % der Querschnittshöhe des Reifens beträgt.

Bei einer weiteren bevorzugten Ausführungsvariante können die mit textilen Festigkeitsträgern versehenen separaten Lagenteile mit zumindest einem ihrer Abschnitte bis radial innerhalb des Gürtels verlaufen, wobei der in axialer Richtung ermittelte Abstand zwischen der Randkante der breitesten Gürtellage und der Randkante des jeweiligen Lagenteiles mindestens 15 mm beträgt.

Bei weiteren Ausführungsvarianten der Erfindung können unterschiedliche Anordnungen der Lagen mit textilen Festigkeitsträgern und der Lage bzw. Lagenteile mit Stahl-Festigkeitsträgern vorgesehen sein.

Bei einer dieser erfindungsgemäßen Ausführungsvarianten verläuft die Lage mit Stahl-Festigkeitsträgern in den Seitenwandbereichen oder bei den Wulstbereichen axial außerhalb der Lagenteile mit textilen Festigkeitsträgern.

Bei einer weiteren bevorzugten Ausführungsform verläuft die Lage mit Stahl-Festigkeitsträgern in den Seitenwandbereichen oder bei den Wulstbereichen axial innerhalb der Lagenteile mit textilen Festigkeitsträgern.

Bei einer noch weiteren bevorzugten Ausführungsform verläuft die Lage mit Stahl-Festigkeitsträgern bei den Wulstbereichen axial innerhalb des Hochschlages der Lagenteile mit textilen Festigkeitsträgern.

Weitere Merkmale, Vorteile und Einzelheiten der Erfindung werden nun anhand der Zeichnung, die schematisch mehrere Ausführungsbeispiele darstellt, näher beschrieben.

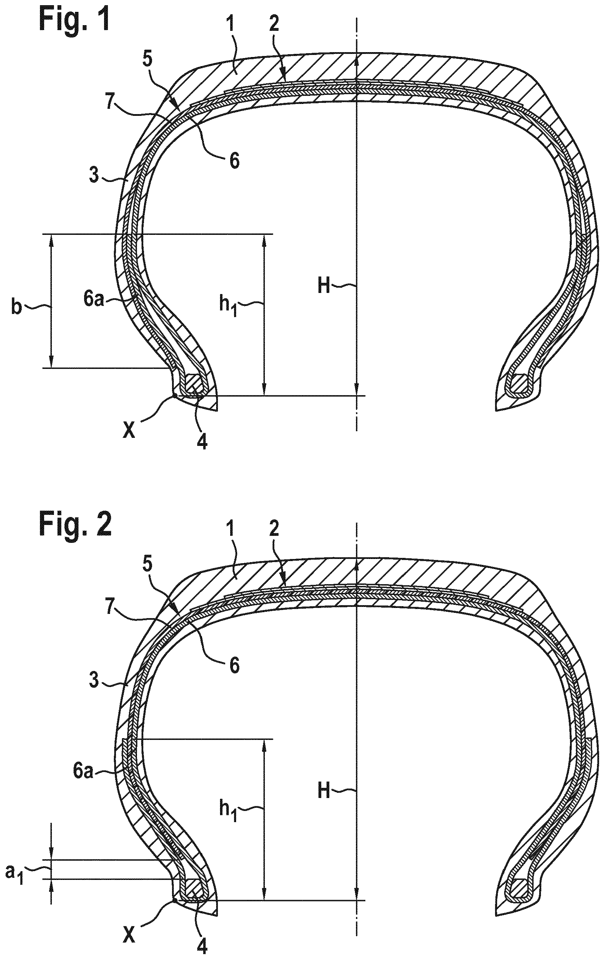

Fig. 1 bis Fig. 6 Querschnitte durch Fahrzeugluftreifen mit unterschiedlichen Ausführungsvarianten.

Die in Fig. 1 bis Fig. 6 gezeigten Fahrzeugluftreifen sind Reifen radialer Bauart für Personenkraftwagen, Vans oder Lighttrucks. In den schematischen Darstellungen sind von den Bestandteilen des Fahrzeugluftreifens jeweils ein Laufstreifen 1, ein bei den gezeigten Ausführungsformen zweilagiger Gürtel 2, Seitenwände 3, Wulstbereiche mit Wulstkernen 4 und eine Radialkarkasse 5, auf deren Ausgestaltung noch näher eingegangen wird, dargestellt. Die Gürtellagen des Gürtels 2 bestehen in an sich bekannter Weise jeweils aus in Gummi eingebetteten und in jeder Lage parallel zueinander verlaufenden Stahlkorden bekannter Konstruktion, wobei die Stahlkorde der einen Gürtellage die Stahlkorde der zweiten Gürtellage kreuzen. Der Gürtel 2 kann mehr als zwei Gürtellagen aufweisen, insbesondere kann eine an sich bekannte Gürtelbandage vorgesehen sein. In den Wulstbereichen können ferner Kernprofile sowie an sich bekannte Verstärkungslagen, wie Kernfahnen, Wulstverstärker oder Wulstgewebebänder bzw. Wulstschutzbänder, eingebaut sein.

Die Karkasse 5 enthält zumindest eine Lage mit textilen Festigkeitsträgern und zumindest eine Lage mit Stahl-Festigkeitsträgem. Lagen mit textilen Festigkeitsträgern bestehen aus in eine Gummierungsmischung eingebettetem textilen Gewebe, in welchem die Schussfäden die im Reifen in radialer Richtung bzw. im Wesentlichen in radialer Richtung verlaufenden Festigkeitsträger bilden. Die textilen Festigkeitsträger können Garne oder Korde aus Polyester, PET (Polyethylenterephthalat), PEN (Polyethylennaphthalat), Aramid, Nylon oder Viskose, wie beispielsweise Rayon oder Lyocell, sein. Im Rahmen der Erfindung können daher die an sich bekannten textilen Karkasslagen verwendet werden. Unter einer Lage mit Stahl-Festigkeitsträgern wird eine Karkasslage verstanden, welche aus in eine Gummierungsmischung eingebetteten, im Reifen in radialer Richtung bzw. im Wesentlichen in radialer Richtung verlaufenden Stahldrähten oder Stahlkorden, die einlagig in einer bestimmten Dichte innerhalb der Lage verlaufen, besteht. Als Stahldraht kommt beispielsweise ein Stahldraht 1 × 0,30 mm in Frage, als Stahlkord kommen die derzeit bekannten und in Karkasslagen eingesetzten Stahlkorde, aber auch Stahlkorde, die in Gürtellagen verwendet werden, in Frage, beispielsweise Stahlkorde der Konstruktion 2 × 0,30 mm, 2 + 2 × 0,30 mm und dergleichen. Die Stahlkorde enthalten daher üblicherweise zwei bis zwölf Stahlfilamente, welche aus einem Stahl einer üblichen Festigkeitsklasse bestehen können.

Bei den in Fig. 1 bis Fig. 3 dargestellten Ausführungsformen verläuft eine Lage 6 mit textile Festigkeitsträgern von Wulstbereich zu Wulstbereich, radial innerhalb der Laufstreifens 1, daher in bekannter Weise zwischen der Innenschicht und dem Gürtel 2. In den Wulstbereichen ist die Lage 6 von axial innen nach axial außen um die Wulstkerne 4 in bekannter Weise herumgeschlagen, ihr freier Endabschnitt bildet in an sich bekannter Weise den sogenannten Hochschlag 6a, welcher bis in eine Höhe h₁, die mindestens 5 % der Querschnittshöhe H beträgt, reicht. Bei den in Fig. 1 bis 3 dargestellten Ausführungsformen beträgt h₁ etwa 40 % von H. Die Höhen H und h₁ werden in radialer Richtung bei montiertem, unter Nenndruck und Nennlast befindlichem Reifen von einer Basislinie aus ermittelt, die parallel zur nicht gezeigten Reifenachse bei auf einer nicht gezeigten Felge montiertem Reifen durch den Felgeneckpunkt verläuft. Der Hochschlag 6a kann jedoch auch bis unter den Randbreich des Gürtels 2 reichen.

Bei der in Fig. 1 gezeigten Ausführungsform verläuft eine Lage 7 mit Stahl-Festigkeitsträgern von Wulstbereich zu Wulstbereich radial außerhalb der Lage 6 und auch außerhalb des Hochschlages 6a in Kontakt mit der textilen Lage 6 und dem Hochschlag 6a. Die Lage 7 mit Stahl- Festigkeitsträgern umschlingt jedoch nicht den Wulstkern 4, sondern reicht höchstens in den Bereich seitlich des Wulstkernes 4. Die Lage 7 überlappt mit dem Hochschlag 6a, wobei der Überlappungsbereich eine in radialer Richtung ermittelte Breite b von mindestens 15 mm aufweist.

Fig. 2 zeigt eine Ausführungsvariante, bei welcher die Lage 7 mit Stahl- Festigkeitsträgern ebenfalls von Wulstbereich zu Wulstbereich sowie radial außerhalb der textilen Lage 6 und zwischen dieser und dem Hochschlag 6a, axial außerhalb eines nicht dargestellten Kernprofiles, verläuft. Die Lage 7 mit Stahl- Festigkeitsträgern endet in einem kleinen radialen Abstand a₁ von bis zu 10 mm vom Wulstkern 4.

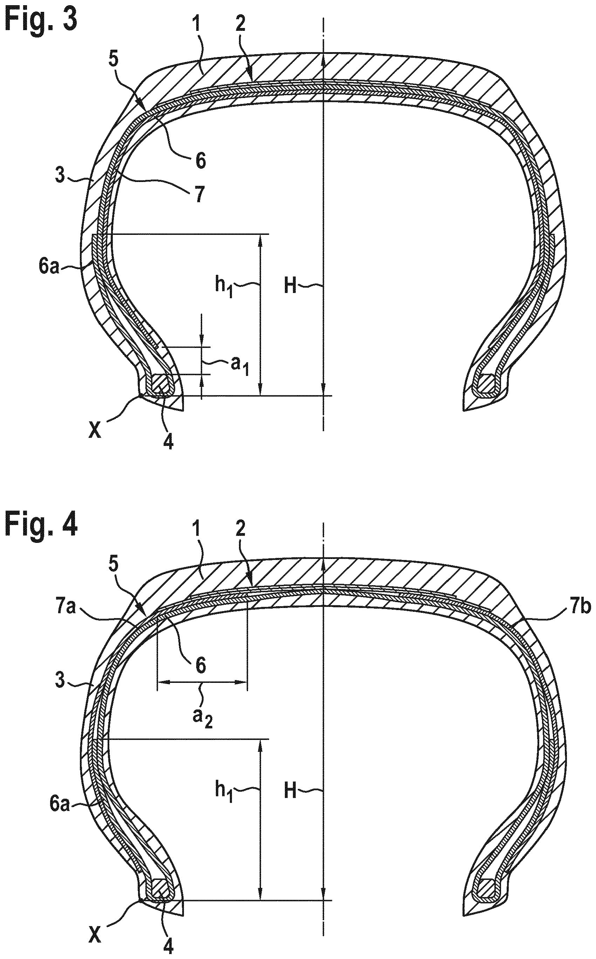

Bei der in Fig. 3 gezeigten Ausführungsform verläuft die ebenfalls von Wulstbereich zu Wulstbereich durchgehend vorgesehene Lage 7 mit Stahl- Festigkeitsträgern innerhalb der textilen Lage 6 und demnach zwischen dieser und der Innenschicht sowie in Kontakt zur textilen Lage 6 und zur Innenschicht. Die Lage 7 mit Stahl- Festigkeitsträgern endet in den Wulstbereichen in einem radialen Abstand a₁ von bis zu 10 mm vom jeweiligen Wulstkern 4.

Bei alternativen Ausführungsformen, von welchen eine in Fig. 4 dargestellt ist, sind zwei separate Lagenteile 7a, 7b mit Stahl- Festigkeitsträgern vorgesehen, die jeweils radial innerhalb des Gürtels 2 enden und ansonsten analog zu den Ausführungsvarianten der Fig. 1 bis 3 angeordnet sind. Die textile Lage 6 verläuft ebenfalls analog zu den Ausführungsvarianten der Fig. 1 bis 3. Jeder Lagenteil 7a, 7b überlappt mit dem Gürtel 2 derart, dass der in axialer Richtung ermittelte Abstand a₂ zwischen der äußeren Randkante der breitesten Gürtellage und der Randkante jeden Lagenteiles 7a, 7b mindestens 15 mm und insbesondere bis zu 30 mm beträgt. Fig. 4 zeigt jene Ausführungsform, bei welcher jeder Lagenteil 7a, 7b außerhalb der Hochschläge 6a verläuft.

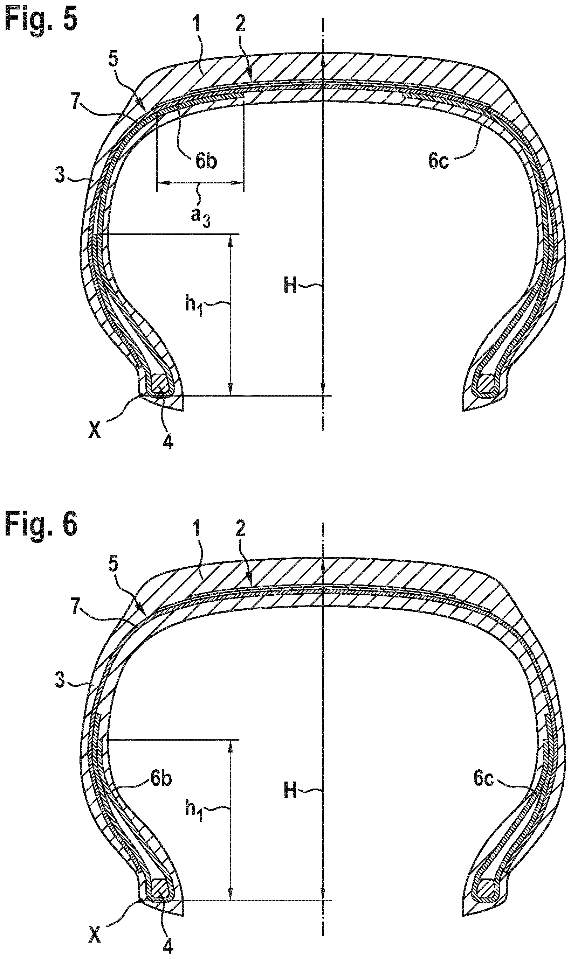

Bei Varianten der Erfindung ist eine Lage 7 mit Stahl- Festigkeitsträgern als von Wulstbereich zu Wulstbereich durchgehende Lage vorgesehen, mit einem Verlauf analog zu jenen gemäß Fig. 1 bis 3, ferner sind zwei Lagenteile 6b und 6c mit textilen Festigkeitsträgern vorgesehen, die radial innerhalb des Gürtels 2 enden. Fig. 5 zeigt jene Ausführungsform, bei welcher in den Seitenwänden 3 und den Wulstbereichen die Lage 7 mit Stahl- Festigkeitsträgern und die textilen Lagenteile 6b, 6c analog zu Fig. 1 angeordnet sind. Der Überlappungsbereich zwischen den Lagenteilen 6b, 6c und dem Gürtel 2 ist derart, dass analog zu Fig. 4 der axiale Abstand a₃ zwischen den äußeren Randkanten der breitesten Gürtellage und der Randkante des jeweiligen Lagenteiles 6b, 6c mindestens 15 mm, insbesondere bis zu 30 mm, beträgt.

Fig. 6 zeigt eine Ausführungsform der Erfindung, bei welcher eine Lage 7 mit Stahl-Festigkeitsträgern durchgehend von Wulstbereich zu Wulstbereich verläuft und in den Wulstbereichen textile Lagenteile 6b, 6c angeordnet sind. Jeder textile Lagenteil 6b, 6c umläuft je einen Wulstkern 4, wobei die textilen Lagenteile 6b, 6c in radialer Richtung bis in die Höhe h₁ reichen, die mindestens 5 % der Querschnittshöhe H des Reifens beträgt, wobei sich die Enden der Lagenteile 6b, 6c in unterschiedlichen Höhen h₁ befinden können. Zumindest einer der Lagenteile 6b, 6c, vorzugsweise auch beide, können bis unter den Gürtelbereich reichen. Die Lage 7 mit Stahl- Festigkeitsträgern verläuft analog zu Fig. 1 außerhalb der äußeren Abschnitte der Lagenteile 6b, 6c, der Überlappungsbereich mit dem Lagenteil 6b weist eine Breite b von mindestens 15 mm, insbesondere bis zu 30 mm, auf. Bei weiteren, nicht gezeigten Ausführungsformen verläuft die Lage 7 mit Stahl-Festigkeitsträgern analog zu den in Fig. 2 und 3 gezeigten Ausführungsvarianten, mit der Überlappungsbreite b zu mindestens einem der Abschnitte der Lagenteile 6b, 6c von mindestens 15 mm.

Bei weiteren, nicht dargestellten Ausführungsvarianten kann mehr als eine Lage mit textilen Festigkeitsträgern, insbesondere können zwei oder drei textile Lagen, aufeinander positioniert, vorgesehen sein. Analoges gilt für Ausführungsvarianten mit textilen Lagenteilen.

### Bezugsziffernliste

- 1: Laufstreifen
- 2: Gürtel
- 3: Seitenwand
- 4: Wulstkern
- 5: Karkasse
- 6: Lage
- 6a: Hochschlag
- 6b, 6c: Lagenteil
- 7: Lage
- 7a, 7b: Lagenteil
- a₁, a₂, a₃: Abstand
- b: Breite
- H, h₁: Höhe

## Patentansprüche

1. Fahrzeugluftreifen in radialer Bauart mit einem profilierten Laufstreifen (1), einem mehrlagigen Gürtel (2), Wulstbereichen mit Wulstkernen (4) sowie mit einer Radialkarkasse, welche in Kombination Lagen (6b, 6c; 7) mit textilen Festigkeitsträgern und mit Festigkeitsträgern aus Stahl enthält, wobei zumindest eine Lage (6b, 6c) mit textilen Festigkeitsträgern die Wulstkerne (4) umschließt und eine Lage (7) mit Stahl- Festigkeitsträgern vorgesehen ist, welche von Wulstbereich zu Wulstbereich verläuft (aus A4) jedoch die Wulstkerne (4) nicht umschließt und in einem Überlappungsbereich, welcher eine Breite (b) von mindestens 15 mm aufweist, an die zumindest eine Lage (6b, 6c) mit textilen Festigkeitsträgern angebunden ist,
**dadurch gekennzeichnet,**
**dass** jeder Wulstkern (4) von zumindest je einem separaten Lagenteil (6b, 6c) mit textilen Festigkeitsträgern umschlossen ist.

2. Fahrzeugluftreifen nach Anspruch 1, **dadurch gekennzeichnet, dass** die mit textilen Festigkeitsträgern versehenen separaten Lagenteile (6b, 6c) mit ihren Abschnitten bis in eine in radialer Richtung ermittelte Höhe (hi) reichen, die mindestens 5 % der Querschnittshöhe (H) des Reifens beträgt.

3. Fahrzeugluftreifen nach Anspruch 1oder 2, **dadurch gekennzeichnet, dass** die mit textilen Festigkeitsträgern versehenen separaten Lagenteile (6b, 6c) mit zumindest einem ihrer Abschnitte bis radial innerhalb des Gürtels (2) verlaufen, wobei der in axialer Richtung ermittelte Abstand (a₃) zwischen der Randkante der breitesten Gürtellage und der Randkante des jeweiligen Lagenteiles (6b, 6c) mindestens 15 mm beträgt.

4. Fahrzeugluftreifen nach einem der Ansprüche 1 bis 3, **dadurch gekennzeichnet, dass** die Lage (7) mit Stahl-Festigkeitsträgern in den Seitenwandbereichen oder bei den Wulstbereichen axial außerhalb der Lagenteile (6b, 6c) mit textilen Festigkeitsträgern verlaufen.

5. Fahrzeugluftreifen nach einem der Ansprüche 1 bis 3, **dadurch gekennzeichnet, dass** die Lage (7) mit Stahl-Festigkeitsträgern in den Seitenwandbereichen oder bei den Wulstbereichen axial innerhalb der Lagenteile (6b, 6c) mit textilen Festigkeitsträgern verlaufen.

6. Fahrzeugluftreifen nach einem der Ansprüche 1 bis 3, **dadurch gekennzeichnet, dass** die Lage (7) mit Stahl-Festigkeitsträgern bei den Wulstbereichen axial innerhalb des Hochschlages (6a) der Lagenteile (6b, 6c) mit textilen Festigkeitsträgern und in Kontakt zu diesen verlaufen.

## Claims

1. Pneumatic vehicle tyre of radial type of construction, having a profiled tread (1), having a multi-ply belt (2), having bead regions with bead cores (4), and having a radial carcass which, in combination, comprises plies (6b, 6c; 7) with textile strengthening members and with strengthening members composed of steel, wherein at least one ply (6b, 6c) with textile strengthening members surrounds the bead cores (4), and a ply (7) with steel strengthening members is provided which runs from bead region to bead region (from A4) but does not surround the bead cores (4) and which, in an overlap region which has a width (b) of at least 15 mm, is attached to the at least one ply (6b, 6c) with textile strengthening members,
**characterized**
**in that** each bead core (4) is surrounded by at least in each case one separate ply part (6b, 6c) with textile strengthening members.

2. Pneumatic vehicle tyre according to Claim 1,
**characterized in that** the separate ply parts (6b, 6c) equipped with textile strengthening members extend with their sections as far as a height (h₁), measured in a radial direction, which amounts to at least 5% of the cross-sectional height (H) of the tyre.

3. Pneumatic vehicle tyre according to Claim 1 or 2,
**characterized in that** the separate ply parts (6b, 6c) equipped with textile strengthening members run with at least one of their sections as far as radially within the belt (2), wherein the spacing (a₃), measured in an axial direction, between the marginal edge of the widest belt ply and the marginal edge of the respective ply part (6b, 6c) amounts to at least 15 mm.

4. Pneumatic vehicle tyre according to one of Claims 1 to 3, **characterized in that** the ply (7) with steel strengthening members run, in the sidewall regions or at the bead regions, axially outside the ply parts (6b, 6c) with textile strengthening members.

5. Pneumatic vehicle tyre according to one of Claims 1 to 3, **characterized in that** the ply (7) with steel strengthening members run, in the sidewall regions or at the bead regions, axially within the ply parts (6b, 6c) with textile strengthening members.

6. Pneumatic vehicle tyre according to one of Claims 1 to 3, **characterized in that** the ply (7) with steel strengthening members run, at the bead regions, axially within, and so as to be in contact with, the turn-up (6a) of the ply parts (6b, 6c) with textile strengthening members.

## Revendications

1. Pneumatique de véhicule de construction radiale comprenant une bande de roulement profilée (1), une ceinture multicouche (2), des zones de talon avec des tringles (4) et une carcasse radiale qui contient, en combinaison, des couches (6b, 6c ; 7) avec des renforts textiles et des renforts en acier, au moins une couche (6b, 6c) avec des renforts textiles entourant les tringles (4) et une couche (7) avec des renforts en acier étant prévue, laquelle s'étend de la zone de talon à la zone de talon (depuis A4) mais n'entoure pas les tringles (4), et, dans une région de chevauchement qui présente une largeur (b) d'au moins 15 mm, est reliée à l'au moins une couche (6b, 6c) avec des renforts textiles,
**caractérisé en ce que**
chaque tringle (4) d'au moins une partie de couche respective séparée (6b, 6c) est entourée par des renforts textiles.

2. Pneumatique de véhicule selon la revendication 1,
**caractérisé en ce que** les parties de couche (6b, 6c) séparées pourvues de renforts textiles s'étendent avec leurs portions jusqu'à une hauteur (h₁) déterminée dans une direction radiale, qui vaut au moins 5 % de la hauteur en coupe transversale (H) du pneu.

3. Pneumatique de véhicule selon la revendication 1 ou 2, **caractérisé en ce que** les parties de couche (6b, 6c) séparées pourvues de renforts textiles s'étendent avec au moins l'une de leurs portions radialement jusqu'à l'intérieur de la ceinture (2), la distance (a₃) déterminée dans la direction axiale entre l'arête de bord de la couche de ceinture la plus large et l'arête de bord de la partie de couche respective (6b, 6c) valant au moins 15 mm.

4. Pneumatique de véhicule selon l'une quelconque des revendications 1 à 3, **caractérisé en ce que** la couche (7) avec les renforts en acier s'étendent dans les régions de paroi latérale ou dans le cas des régions de talon axialement à l'extérieur des parties de couche (6b, 6c) avec des renforts textiles.

5. Pneumatique de véhicule selon l'une quelconque des revendications 1 à 3, **caractérisé en ce que** la couche (7) avec des renforts en acier s'étendent dans les régions de paroi latérale ou dans le cas des régions de talon axialement à l'intérieur des parties de couche (6b, 6c) avec des renforts textiles.

6. Pneumatique de véhicule selon l'une quelconque des revendications 1 à 3, **caractérisé en ce que** la couche (7) avec des renforts en acier dans le cas des régions de talon s'étendent axialement à l'intérieur du col (6a) des parties de couche (6b, 6c) avec des renforts textiles et en contact avec celles-ci.
